# EUROPÄISCHE PATENTANMELDUNG

(11) **EP 4 328 695 A1**
(43) Veröffentlichungstag der Anmeldung: **28.02.2024**
(21) Anmeldenummer: 23185983.6
(22) Anmeldetag: 18.07.2023
(51) Int. Cl.: G05D 1/00

(54) **SICHERER AUTONOMER HAUSHALTSROBOTER**

(30) Priorität: 26.08.2022 DE 102022208856
(71) Anmelder: BSH Hausgeräte GmbH, 81739 München (DE)
(72) Erfinder: Rychly, Leonard, 81541 München (DE); Zimmer, Christoph, 70825 Korntal (DE)

(57) **Zusammenfassung**

Ein Verfahren (200) zum Steuern eines Roboters (100) in einem Haushalt (105) umfasst Schritte des Bestimmens einer Bewegung des Roboters (100) im Haushalt (105); des Bestimmens einer Wahrscheinlichkeit, mit der die Bewegung sicher ist, auf der Basis eines probabilistischen datenbasierten Modells (135); und des Steuerns der Bewegung, falls die Wahrscheinlichkeit höher als ein vorbestimmter Schwellenwert ist.

## Beschreibung

Die Erfindung betrifft einen autonomen Haushaltsroboter. Insbesondere betrifft die Erfindung die Steuerung einer sicheren Bewegung des Haushaltsroboters.

Ein Haushaltsroboter ist dazu eingerichtet, sich autonom in einem Haushalt zu bewegen. Dabei kann der Haushaltsroboter beispielsweise einen Staubsaugroboter umfassen, dessen Aufgabe darin besteht, eine Bodenfläche im Haushalt zu saugen. Zur Navigation verfügt der Haushaltsroboter üblicherweise über kartografische Informationen des Haushalts und wenigstens einen Sensor zur Abtastung seines Umfelds. Die kartografischen Informationen können auf der Basis von erfassten Sensorwerten mittels eines SLAM (synchronous localization and mapping) Verfahrens aktualisiert und gleichzeitig der Haushaltsroboter im Haushalt positioniert werden.

Der bewegliche Haushaltsroboter stellt eine potentielle Gefahr im Haushalt dar. Einerseits könnte er in den Bewegungspfad einer Person geraden, die auf ihn treten oder ober ihn stolpern könnte. Andererseits könnte der Haushaltsroboter mit einem Gegenstand kollidieren, beispielsweise einer Wand oder einer Bodenvase. Außerdem könnte er selbst Schaden nehmen, wenn er sich beispielsweise in einem auf dem Boden liegenden Kabel oder in langen Teppichfransen verheddert.

DE 10 2016 125 408 A1 schlägt vor, eine Bewegung des Haushaltsroboters bezüglich ihres Gefahrenniveaus zu bewerten und zu ändern oder zu stoppen, wenn die Bewegung als gefährlich eingestuft wird. Diese Technik erfordert jedoch eine fortlaufende Bestimmung des Gefahrenniveaus und ist daher aufwändig in der Anwendung. Sollte das Gefahrenniveau unzutreffend bestimmt werden, beispielsweise wegen eines einzelnen Messfehlers, so kann der Haushaltsroboter trotzdem zur Gefahrenquelle im Haushalt werden.

EP 3 888 306 A1 betrifft miteinander vernetzte Sicherheitssysteme in einem industriellen Umfeld. Die Sicherheitszellen tauschen sich über erkannte Objekte oder Personen aus. Ein Objekt oder eine Person, die sich von einer ersten Sicherheitszelle in eine zweite bewegt muss in der zweiten Sicherheitszelle nicht mehr neu erkannt werden.

Eine der vorliegenden Erfindung zu Grunde liegende Aufgabe besteht in der Angabe einer verbesserten Technik zur sicheren Steuerung eines Haushaltsroboters. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Steuern eines Roboters in einem Haushalt Schritte des Bestimmens einer Bewegung des Roboters im Haushalt; des Bestimmens einer Wahrscheinlichkeit, mit der die Bewegung sicher ist, auf der Basis eines insbesondere probabilistischen datenbasierten Modells; und des Steuerns der Bewegung, falls die Wahrscheinlichkeit höher als ein vorbestimmter Schwellenwert ist.

Zur Verdeutlichung der Grundidee sei kurz auf SLAM eingegangen. Bei einem SLAM-Algorithmus kommt in der Regel ein Kalman-Filter zum Einsatz. Hier kann das Prinzip so beschrieben werden, dass der Roboter nicht hundertprozentig exakt weiß, wo er sich im Haushalt befindet. Er kann aber Entfernungen zu sogenannten Landmarks messen und auf der Basis dieser Entfernungsmessungen seine Position schätzen. Wenn er dann fährt, kann er die Richtung und Länge seiner Fortbewegung schätzen und daraufhin seine Position fortschreiben. Die Unsicherheit hinsichtlich seines Aufenthaltsortes wird dabei jedoch immer größer. Mathematisch ausgedrückt ist der Erwartungswert seines Aufenthaltsortes µ und die Standardabweichung seines Aufenthaltsortes σ. Durch eine erneute Ermittlung der Abstände des Roboters zu den Landmarks kann die Standardabweichung σ reduziert werden. Der Roboter vermindert sozusagen durch erneute Messung die Unsicherheit hinsichtlich seines Aufenthaltsortes.

Beim vorliegenden Verfahren kann die Grundkonstellation anders sein. Der Roboter ist bspw. an einem Punkt A und will zu einem Punkt B fahren. Vom Punkt A kann er über unterschiedliche Wege (Trajektorien) zum Punkt B gelangen. Nehmen wir an, in der Nähe der Trajektorien gibt es ein Hindernis H, zu dem der Roboter seine Entfernung Y messen kann. Das Ziel könnte es nun sein, sich unterschiedliche mögliche Trajektorien von Punkt A zu Punkt B zu überlegen und diese hinsichtlich eines Schätzwertes für Y zu bewerten. Wenn auf einer Trajektorie der Schätzwert für Y zu gering wird, wird diese Trajektorie verworfen. Denn auf dieser Trajektorie ist die Gefahr zu groß, in das Hindernis H zu fahren. Y entlang einer Trajektorie kann mit Hilfe eines Gaußprozesses geschätzt werden. Der Schritte des Bestimmens einer Bewegung des Roboters im Haushalt kann als Planung einer solchen Trajektorie verstanden werden bzw. kann mit dieser zusammenhängen. Mithilfe des erwähnten Datenmodells kann rasch bestimmt werden, ob eine Bewegung als sicher oder als unsicher einzustufen ist. Der Roboter kann so schneller im Haushalt agieren und sich verbessert autonom bewegen. Eine Situation, in welcher der Roboter aus einer Situation befreit oder von einer Position entfernt werden muss, kann verbessert vermieden werden. Darüber hinaus können neue Funktionen, wie z.B. das vorsichtige Abstauben von Regalen, realisiert werden, die eine risikoabhängige Bewegungsplanung erfordern und mit bisherigen Ansätzen aufgrund der erforderlichen hohen Sicherheitsabstände nicht oder nur ungenau realisiert werden konnten. Außerdem kann das Datenmodell auf der Basis von Beobachtungen aus beliebigen Quellen fortgebildet werden, sodass die Bestimmung der Sicherheit weiter verbessert werden kann. Die Bestimmung kann mit hoher Qualität durchgeführt werden. Das Datenmodell kann mehreren Robotern zugänglich gemacht werden, die sich im selben oder in unterschiedlichen Haushalten bewegen können.

Sollte die Bewegung als nicht sicher eingestuft werden, so kann sie unterlassen, durch eine andere Bewegung ersetzt oder so verändert werden, dass sie als sicher eingestuft wird. In einer weiteren Ausführungsform wird die Bewegung derart bestimmt, dass die Wahrscheinlichkeit maximiert ist. Dazu kann die Bewegung sukzessive verändert werden, bis ein bezüglich der Sicherheit optimaler Verlauf gefunden ist. Es können mehrere Bewegungen bestimmt werden, von denen diejenige ausgewählt werden kann, deren Wahrscheinlichkeit für vorliegende Sicherheit maximal ist.

Als sicher kann eine Bewegung gelten, bei der ein Kontakt mit einem Objekt, einen Lebewesen oder einer Gefahrenstelle vermieden wird. Zusätzlich kann eine vorbestimmte Sicherheitsmarge berücksichtigt werden, indem ein vorbestimmter Sicherheitsabstand um ein Objekt eingehalten wird. Wird der Sicherheitsabstand im Lauf der Bewegung unterschritten, kann die Sicherheit der Bewegung nicht bestimmt werden.

Neben der Vermeidung von Gefahrensituationen kann das hier beschriebene Verfahren auch dazu verwendet werden, die Bewegung des Roboters zu verbessern, sowohl für die Roboterbasis als auch für einen Endeffektor wie einen Abstaubarm. Einfache regelgestützte Verhaltensplaner benötigen oft überdimensionierte Sicherheitsabstände und stark reduzierte Geschwindigkeiten, um eine fehlende Risikoeinschätzung auszugleichen. Mit Hilfe des hier beschriebenen Ansatzes, kann der Roboter nicht nur Gefahrensituationen vermeiden, sondern überhaupt in risikonahen Situationen operieren.

Während der Bewegung des Roboters kann ein Sicherheitsindikator bestimmt werden, der auf ein aktuelles Gefährdungspotential des Roboters im Rahmen der Bewegung hinweist. Das Modell kann auf der Basis einer Beobachtung, die den bestimmten Sicherheitsindikator und die Bewegung umfasst, erstellt oder verbessert werden. So kann das Modell während der Bewegung des Roboters permanent fortgebildet werden. Die Beobachtungen können fortlaufend bzw. in vorbestimmten zeitlichen oder räumlichen Abständen erstellt werden.

Durch das Erstellen des Modells kann ein Bewegungsraum im Haushalt, in dem kein Kontakt mit einem Objekt, einem Lebewesen oder einer Gefahrenstelle droht, schnell und sicher identifiziert werden. Solange sich der Roboter in einem solchen Bewegungsraum befindet, kann er mit voller Geschwindigkeit bewegt werden, ohne eine Kollision zu riskieren. Ein Gefährdungspotential bei der Bewegung des Roboters kann abhängig von seiner Position im Haushalt sein und das Gefährdungspotential kann mithilfe des Modells bestimmt werden. Die Bewegungsgeschwindigkeit des Roboters kann in Abhängigkeit des bestimmten Gefährdungspotentials reduziert werden.

Auf der Basis des Modells kann das Gefährdungspotential des Roboters im Lauf der Bewegung bestimmt werden. Die Bewegung kann als sicher bestimmt werden, falls das Gefährdungspotential im Lauf der Bewegung einen vorbestimmten Schwellenwert nicht übersteigt. Die Bestimmung des Gefährdungspotentials eines Roboters bei einer vorbestimmten Bewegung kann beispielsweise mittels einer Technik erfolgen, die in DE 10 2019 203 751 beschrieben ist. Das Trainieren eines dynamischen Modells im vorliegenden Kontext ist beispielsweise in DE 10 2018 215 061 genauer ausgeführt.

Das Modell kann leicht an sich ändernde Verhältnisse im Haushalt angepasst werden. Beispielsweise kann eine Beobachtung aus dem Modell entfernt werden, wenn der Sicherheitsindikator bezüglich eines Objekts im Bereich des Roboters bestimmt wurde, das nicht mehr vorhanden ist. Das Entfernen der Beobachtung kann abhängig von der Beobachtung sein. Beispielsweise kann berücksichtigt werden, um welche Art von Objekt oder Stelle es sich handelt, die ihre Position verändert hat oder die nicht mehr vorliegt. Beispielsweise kann eine Beobachtung eines Objekts, das als Haustier erkannt wurde, schneller wieder aus dem Modell entfernt werden als eine Beobachtung, die einen Tisch oder ein anderes Möbelstück betrifft.

In einer ersten Variante umfasst das Modell einen Gaußprozess. Damit kann das Verhalten eines nicht-deterministischen Systems auf der Basis von stochastischen Größen oder Beobachtungen mathematisch modelliert werden. Der Gaußprozess kann eine Kernel-Methode umfassen. Der Prozess kann wie ein überwachtes Maschinenlernverfahren zur abstrakten Modellierung anhand von Trainingsbeispielen verwendet werden, wobei in vielen Fällen kein iteratives Training wie bei neuronalen Netzen notwendig ist. Stattdessen kann der Gaußprozess sehr effizient mit linearer Algebra aus statistischen Größen der Beispiele abgeleitet werden und kann dabei mathematisch klar interpretierbar und entsprechend gut kontrollierbar sein. Außerdem wird üblicherweise bei Interpolationen und Vorhersagen für jeden einzelnen Ausgabewert ein zugehöriges Vertrauensintervall berechnet, das den eigenen Vorhersagefehler präzise schätzt, während die Fehlerfortpflanzung bei bekannter Varianz der Eingabewerte korrekt berücksichtigt wird.

In einer zweiten Variante umfasst das Modell ein künstliches neuronales Netzwerk (KNN). Insbesondere wenn eine große Vielzahl Beobachtungen verfügbar ist oder eine Anzahl Eingangsparameter sehr groß ist, kann das Modell mittels des KNN gut gebildet bzw. nachvollzogen werden.

Die Bewegung kann wenigstens eine Trajektorie umfassen. Bewegt sich der Roboter lediglich durch den Haushalt, kann die Trajektorie seine Position auf einer Bodenfläche angeben. Ist der Roboter in sich beweglich, beispielsweise weil er einen Greifarm aufweist, können mehrere Trajektorien bestimmt werden, die beispielsweise jeweils an einem Gelenk oder am Ende eines über ein Gelenk beweglichen Abschnitts verortet sein können. Die Trajektorie kann zusätzlich zur Stellung oder Position auch eine Bewegungsgeschwindigkeit des Roboters bzw. eines zugeordneten Gelenks ausdrücken.

In einer Ausführungsform wird eine Reihe von Positionen des Roboters auf der Trajektorie bestimmt, wobei Abstände benachbarter Positionen auf der Trajektorie umso kleiner sind, je größer ein Gefährdungspotential des Roboters an einer der Positionen ist. Die Sicherheit kann als nicht gewährleistet bestimmt werden, falls die Abstände ein vorbestimmtes Maß unterschreiten. Diese Ausführungsform kann eine schnellere Bewertung der Sicherheit der Bewegung erlauben. Dies kann vorteilhaft genutzt werden, um einen Stillstand des Roboters während der Planung einer folgenden Bewegung zu vermeiden. Die Bestimmung kann in Echtzeit erfolgen, also mit einer vorbestimmten maximalen Verarbeitungszeit, die weiter bevorzugt einen unterbrechungsfreien Betrieb des Roboters erlaubt.

In einer Weiterführung des Konzepts kann bestimmt werden, dass eine vorbestimmte Bewegung nach dem Modell nicht als sicher bestimmt werden kann; wobei die Bewegung von hoher Aussagekraft für das Modell ist. Die Aussagekraft kann beispielsweise beim Gaußprozess über eine Entropie bzw. prädiktive Varianz bestimmt werden. In diesem Fall kann eine Anfrage oder Anforderung an einen Benutzer gestellt werden, die mangelnde Sicherheit der vorbestimmten Bewegung zu bestätigen oder zu verwerfen. So kann beispielsweise eine Bewegung durch eine wegetechnisch günstige Passage durch den Benutzer in ihrer Sicherheit manuell bewertet werden, um ein aufwändiges Umfahren zu vermeiden, falls der Benutzer das Vorliegen von Sicherheit bestätigt.

Nach einem weiteren Aspekt der Erfindung umfasst eine Steuervorrichtung zur Steuerung eines Roboters in einem Haushalt ein Planungsmodul zur Bestimmung einer Bewegung des Roboters im Haushalt; eine Verarbeitungseinrichtung, die dazu eingerichtet ist, auf der Basis eines probabilistischen datenbasierten Modells eine Wahrscheinlichkeit zu bestimmen, mit der die Bewegung sicher ist; und eine Ausgabeeinrichtung zur Steuerung der Bewegung, falls die Wahrscheinlichkeit höher als ein vorbestimmter Schwellenwert ist.

Die Verarbeitungseinrichtung kann elektronisch ausgeführt und dazu eingerichtet sein, ein hierin beschriebenes Verfahren ganz oder teilweise auszuführen. Dazu kann die Verarbeitungseinrichtung beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nach noch einem weiteren Aspekt der vorliegenden Erfindung umfasst ein Roboter für einen Haushalt eine hierin beschriebene Steuervorrichtung. Der Roboter kann insbesondere zur autonomen Bewegung über eine Bodenfläche im Haushalt eingerichtet sein. Optional kann der Roboter zur Behandlung der Bodenfläche eingerichtet sein, beispielsweise in Form eines Wisch-, Saug- oder Kehrroboters. In einer weiteren Ausführungsform kann der Roboter eine Extremität aufweisen, die um ein Gelenk gegenüber einem anderen Abschnitt bewegt werden kann. Es können auch mehrere Gelenke vorgesehen sein, die auf eine oder mehrere Extremitäten verteilt sein können. Allgemein kann die vorliegende Erfindung für jede Art von Haushaltsroboter verwendet werden, dessen Bewegung eine mögliche Berührung eines anderen Objekts, eines Menschen, eines Tiers und/oder einer Gefahrenstelle bewirken kann.

Die Erfindung wird nun unter Bezug auf die beiliegenden Figuren genauer beschrieben, in denen:
- Figur 1: einen beispielhaften Haushaltsroboter;
- Figur 2: ein Ablaufdiagramm eines Verfahrens zum Steuern eines Roboters; und
- Figur 3: eine Illustration der probabilistischen Bestimmung der Sicherheit einer Bewegung eines Roboters darstellt.

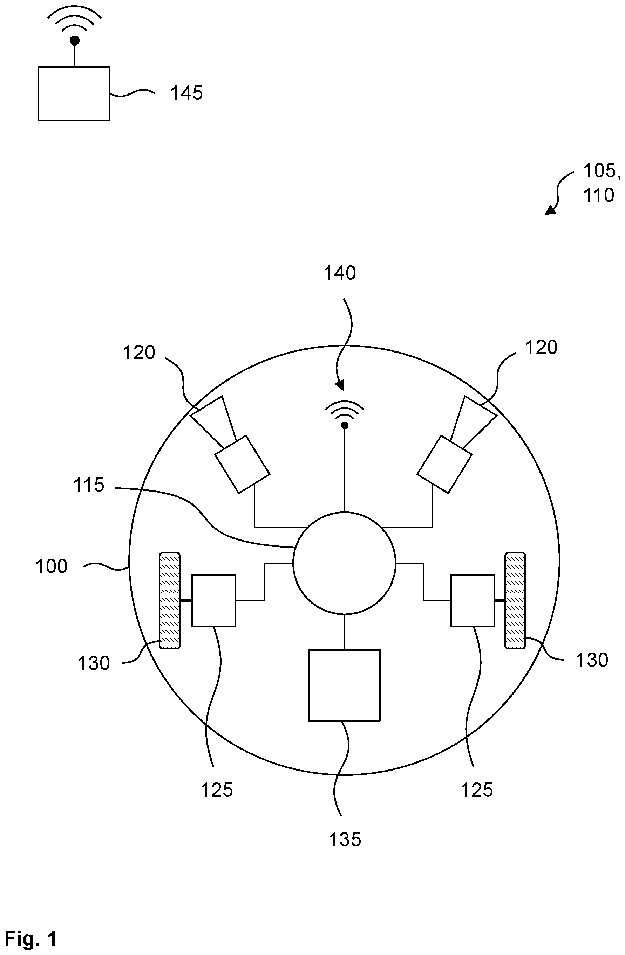

Figur 1 zeigt einen beispielhaften Roboters 100 am Beispiel eines Bodenreinigungsroboters. Der Roboter 100 ist zum Einsatz in einem Haushalt 105 eingerichtet und dazu, sich autonom zu bewegen. Die Bewegung erfolgt im vorliegenden Fall durch eine Positionsänderung auf einer Bodenfläche des Haushalts 105. Rein beispielhaft ist der Roboter 100 im Wesentlichen zylinderförmig und dabei rotationssymmetrisch um eine vertikale Achse, sodass eine Drehung um diese Achse keine Kollision mit einem anderen Gegenstand hervorruft.

Der Roboter 100 umfasst in der dargestellten Ausführungsform eine Steuervorrichtung 110 mit einer Verarbeitungseinrichtung 115, wenigstens einem Sensor 120 zur Abtastung eines Umfelds und einer Schnittstelle zu wenigstens einer Antriebseinrichtung 125, die hier mit einem Antriebsrad 130 verbunden ist und die zur Steuerung einer Bewegung des Roboters 100 auf der Bodenfläche angesteuert werden kann. Der Sensor 120 arbeitet bevorzugt berührungslos und kann beispielsweise einen Radarsensor, einen Li-DAR-Sensor, eine Kamera oder einen Ultraschall-Sensor umfassen. Bevorzugt sind noch weitere Sensoren 120 vorhanden, beispielsweise ein Inertialsensor, ein Kollisionssensor oder ein Sensor zur Bestimmung eines Verlusts von Bodenkontakt.

Die Verarbeitungseinrichtung 115 kann mit einem mathematischen Modell 135 verbunden sein oder das Modell 135 implementieren. Eine optionale Kommunikationseinrichtung 140 ist zur drahtlosen Kommunikation eingerichtet. In der Darstellung von Figur 1 sind Elemente des Roboters 100, die nicht wesentlich zur Erfindung beitragen, nicht dargestellt, beispielsweise ein Energiespeicher oder eine Bearbeitungseinrichtung für den Boden, insbesondere ein Saugwerk oder eine Wischvorrichtung.

Eine Bewegung des Roboters 100 kann ein unerwünschtes Ereignis bewirken, insbesondere eine Kollision des Roboters 100 oder eine Verletzung eines einzuhaltenden vorbestimmten Sicherheitsabstands zu einem Ort oder einem Objekt. Eine Bewegung kann als sicher gelten, falls eine Wahrscheinlichkeit, mit dem während der Bewegung kein unerwünschtes Ereignis eintritt, einen vorbestimmten Schwellenwert übersteigt. Die Wahrscheinlichkeit kann bestimmt werden, bevor oder während der Roboter 100 eine Bewegung vollführt. Zum Steuern des Roboters 100 kann seine Bewegung so geplant werden, dass sie sicher ist. Dabei kann kontinuierlich oder sukzessive vorgegangen werden, sodass stets für eine bevorstehende Bewegung bekannt ist, dass diese sicher ist.

Es wird vorgeschlagen, eine solche Sicherheitsbestimmung mittels des Modells 135 durchzuführen. Das Modell 135 ist dazu bevorzugt probabilistisch und datengetrieben und kann insbesondere einen Gaußprozess umfassen. Außerdem wird vorgeschlagen, das Modell 135 zu trainieren, indem Beobachtungen erstellt werden. Eine Beobachtung kann eine ausgeführte Bewegung, einen Ort bzw. eine Stellung, ein relevantes Objekt im Umfeld und/oder ein Gefährdungspotential umfassen.

Eine Beobachtung kann mittels des Roboters 100 oder mittels einer anderen Einrichtung erstellt werden. In einer Ausführungsform ist eine externe Stelle 145 vorgesehen, die Beobachtungen bereitstellen kann. Deren Beobachtungen können mittels eines lokalen Sensors erstellt oder von einer anderen Stelle empfangen werden, beispielsweise von einem anderen Roboter 100 im Haushalt 105. Optional umfasst die externe Stelle 145 einen anderen Roboter 100 im Haushalt 105.

Das Gefährdungspotential kann eine Wahrscheinlichkeit angeben, mit der bei einer Bewegung des Roboters 100 aus einer aktuellen Position oder Stellung heraus ein vorbestimmtes unerwünschtes Ereignis eintritt. Ist beispielsweise eine Kollision mit einem Objekt bereits erfolgt, so kann die Wahrscheinlichkeit eins betragen. Ansonsten kann das Gefährdungspotential auf der Basis einer freien Fläche um den Roboter 100 herum bestimmt werden. Je größer die freie Fläche ist, desto geringer kann das Gefährdungspotential sein. Die freie Fläche kann aus einer vorherigen Bewegung einer Aufnahme einer Kamera oder eines Sensors zur Tiefenmessung oder aus einer Eingabe eines Benutzers bestimmt sein.

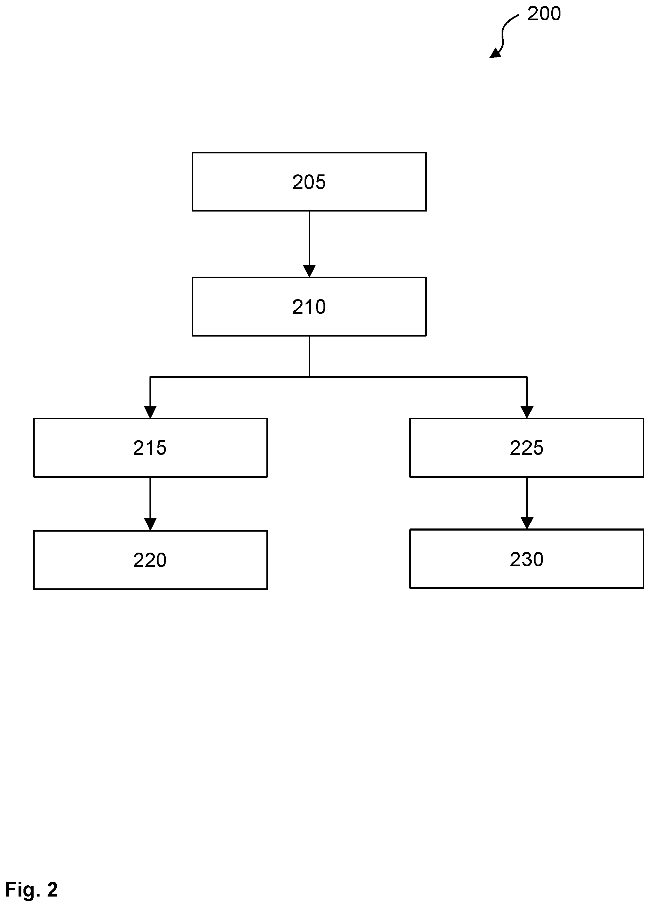

Figur 2 zeigt ein Ablaufdiagramm eines Verfahrens 200 zum Steuern eines Roboters 100 in einem Haushalt 105. Das Verfahren 200 kann insbesondere an Bord des Roboter 100 ausgeführt werden, auch wenn Teile des Verfahrens 200 optional an einer anderen Stelle erbracht werden können.

In einem Schritt 205 kann eine Bewegung des Roboters 100 geplant werden. Dazu können ein Startpunkt und ein Zielpunkt der Bewegung vorgegeben werden. Einer oder mehrere Kandidaten für die Bewegung können jeweils eine Trajektorie umfassen, auf der sich der Roboter 100 zwischen dem Startpunkt und dem Zielpunkt bewegen kann. Der Startpunkt umfasst üblicherweise eine aktuelle Position bzw. Stellung des Roboters 100.

In einem Schritt 210 kann anhand des mathematischen Modells 135 bestimmt werden, ob die Bewegung als sicher gelten kann. Dies kann der Fall sein, wenn eine Wahrscheinlichkeit des Eintritts eines vorbestimmten Ereignisses, insbesondere eine Kollision mit einem Objekt oder ein Unterschreiten eines vorbestimmten Sicherheitsabstands zu einem Objekt, über die gesamte Bewegung unter einem vorbestimmten Schwellenwert bleibt.

Ist die Bewegung sicher, so kann sie in einem Schritt 215 gesteuert werden. Während oder nach der Bewegung können eine oder mehrere Beobachtungen erstellt werden und das Modell 135 kann auf der Basis der Beobachtungen trainiert werden.

Wird im Schritt 210 hingegen bestimmt, dass die Bewegung nicht als sicher gelten kann, so kann in einem Schritt 225 eine andere Bewegung bestimmt werden, um vom Startpunkt zum Zielpunkt zu kommen. Dazu kann eine andere Trajektorie bestimmt werden oder die Trajektorie der unsicheren Bewegung kann verändert werden. Sollte keine ausreichend sichere Bewegung bestimmt werden können, so kann der Zielpunkt verändert werden.

Optional kann für eine Kombination aus Startpunkt und Zielpunkt, für die keine sichere Bewegung gefunden werden kann, in einem Schritt 230 bestimmt werden, ob die Bewegung von hoher Aussagekraft für das Modell 135 ist. In diesem Fall kann eine Person, beispielsweise ein Benutzer, dazu aufgefordert werden, die Sicherheit einer entsprechenden Bewegung zu bestätigen. Erfolgt dies, so kann das Modell an die neu als sicher bekannte Bewegung angepasst werden.

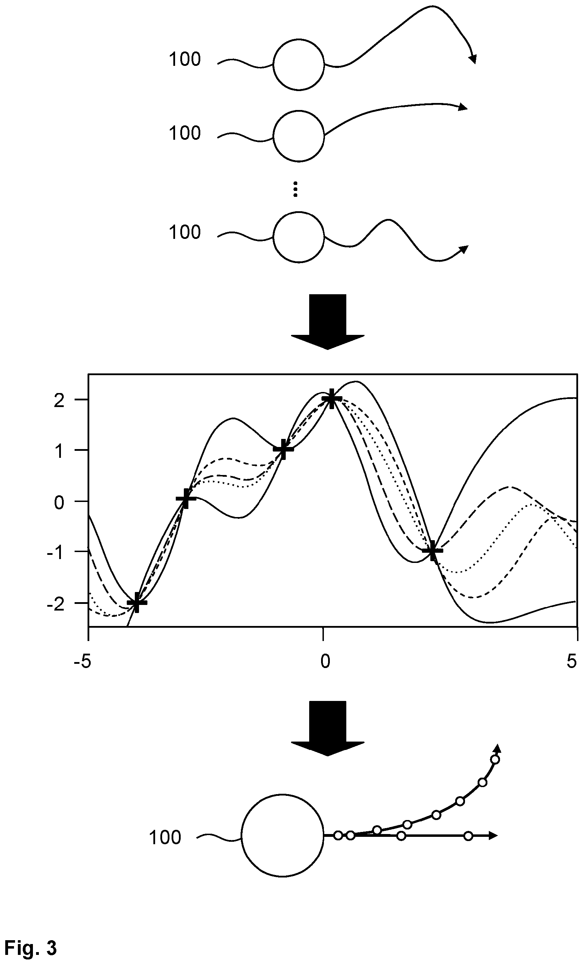

Figur 3 zeigt eine Illustration der probabilistischen Bestimmung der Sicherheit einer Bewegung eines Roboters 100. In einem oberen Bereich sind verschiedene beispielhafte Bewegungen (bzw. Trajektorien) dargestellt, die der Roboter 100 - oder ein anderer Beobachter - bereits durchgeführt hat.

In einem mittleren Bereich sind beispielhafte Kostenfunktionen dargestellt, die mittels des Modells 135 bestimmt werden können. Dazu können die Beobachtungen der bereits erfolgten Bewegungen in das Modell 135 eingebracht werden. In horizontaler Richtung ist ein Bewegungsfortschritt, in vertikaler Richtung ein Sicherheitsindikator, beispielsweise ein Gefährdungspotential, angetragen. Die Bewegungen betreffen üblicherweise eine Anzahl Punkte oder Positionen entlang eines Pfads vom Startpunkt zum Zielpunkt. Das Modell 135 versucht, die diskreten Beobachtungen derart miteinander zu verbinden, dass sich eine wahrscheinliche Abhängigkeit des Sicherheitsindikators vom Bewegungsfortschritt bestimmen lässt. Diese Bestimmung kann mittels eines Gaußprozesses durchgeführt werden. Das trainierte Modell 135 erlaubt es, zu einer geplanten Bewegung zu bestimmen, mit welcher Wahrscheinlichkeit dabei der Sicherheitsindikator unter einem vorbestimmten Maß bleibt. Ein beispielhaft bestimmter Bereich, in dem sich der gesuchte Zusammenhang wahrscheinlich befindet, ist mit durchgezogenen Linien begrenzt.

In einem unteren Bereich ist eine beispielhafte Bewegungsplanung am Roboter 100 dargestellt. Zu zwei möglichen Bewegungen ist jeweils eine Trajektorie mit mehreren Punkten dargestellt. Eine Dichte von Punkten auf einer Trajektorie kann davon abhängig sein, wie komplex die Trajektorie ist. Die Komplexität kann auf der Basis ihrer Krümmung, ihrer Krümmungsänderung und/oder auf der Basis des Sicherheitsindikators bestimmt werden. Je komplexer die Trajektorie ist, desto dichter liegen die Punkte auf ihr. Für jeden Punkt kann mittels des Modells 135 die Wahrscheinlichkeit einer bestehenden Sicherheit bestimmt werden.

### Bezugszeichen

- 100: Roboter
- 105: Haushalt
- 110: Steuervorrichtung
- 115: Verarbeitungseinrichtung
- 120: Sensor
- 125: Antriebseinrichtung
- 130: Antriebsrad
- 135: Modell
- 140: Kommunikationseinrichtung
- 145: externe Stelle

- 200: Verfahren
- 205: Bewegung planen
- 210: Bewegung laut Modell sicher?
- 215: Bewegung durchführen
- 220: Beobachtung in Modell aufnehmen
- 225: Bewegung neu planen
- 230: Bewegung prüfen

## Patentansprüche

1. Verfahren (200) zum Steuern eines Roboters (100) in einem Haushalt (105), wobei das Verfahren (200) folgende Schritte umfasst:
- Bestimmen (205) einer Bewegung des Roboters (100) im Haushalt (105);
- Bestimmen (210) einer Wahrscheinlichkeit, mit der die Bewegung sicher ist, auf der Basis eines probabilistischen datenbasierten Modells (135); und
- Steuern (215) der Bewegung, falls die Wahrscheinlichkeit höher als ein vorbestimmter Schwellenwert ist.

2. Verfahren (200) nach Anspruch 1, wobei die Bewegung so bestimmt (205, 210) wird, dass die Wahrscheinlichkeit maximiert ist.

3. Verfahren (200) nach Anspruch 1 oder 2, wobei während der Bewegung des Roboters (100) ein Sicherheitsindikator bestimmt (220) wird, der auf ein Gefährdungspotential des Roboters (100) durch die Bewegung hinweist; und wobei das Modell (135) auf der Basis einer Beobachtung erstellt oder verbessert (220) wird, die den bestimmten Sicherheitsindikator und die Bewegung umfasst.

4. Verfahren (200) nach Anspruch 3, wobei auf der Basis des Modells (135) das Gefährdungspotential des Roboters (100) im Lauf der Bewegung bestimmt wird; und wobei die Bewegung als sicher bestimmt (210) wird, falls das Gefährdungspotential im Lauf der Bewegung einen vorbestimmten Schwellenwert nicht übersteigt.

5. Verfahren (200) nach Anspruch 3 oder 4, wobei eine Beobachtung aus dem Modell (135) entfernt wird, wenn der Sicherheitsindikator bezüglich eines Objekts im Bereich des Roboters (100) bestimmt wurde, das nicht mehr vorhanden ist.

6. Verfahren (200) nach einem der vorangehenden Ansprüche, wobei das Modell (135) einen Gaußprozess umfasst.

7. Verfahren (200) nach einem der Ansprüche 1 bis 5, wobei das Modell (135) ein künstliches neuronales Netzwerk umfasst.

8. Verfahren (200) nach einem der vorangehenden Ansprüche, wobei die Bewegung wenigstens eine Trajektorie umfasst.

9. Verfahren (200) nach Anspruch 8, wobei eine Reihe von Positionen des Roboters (100) auf der Trajektorie bestimmt wird; wobei Abstände benachbarter Positionen auf der Trajektorie umso kleiner sind, je größer ein Gefährdungspotential des Roboters (100) an einer der Positionen ist.

10. Verfahren (200) nach einem der vorangehenden Ansprüche, wobei bestimmt wird, dass eine vorbestimmte Bewegung nach dem Modell (135) nicht als sicher bestimmt werden kann; wobei die Bewegung von hoher Aussagekraft für das Modell (135) ist; wobei eine Anfrage an einen Benutzer zur Bestätigung oder Korrektur der Sicherheit der vorbestimmten Bewegung gestellt (230) wird.

11. Steuervorrichtung (110) zur Steuerung eines Roboters (100) in einem Haushalt (105), wobei die Steuervorrichtung folgendes umfasst:
- ein Planungsmodul (115) zur Bestimmung einer Bewegung des Roboters (100) im Haushalt (105);
- eine Verarbeitungseinrichtung (115), die dazu eingerichtet ist, auf der Basis eines probabilistischen datenbasierten Modells (135) eine Wahrscheinlichkeit zu bestimmen, mit der die Bewegung sicher ist; und
- eine Ausgabeeinrichtung zur Steuerung der Bewegung, falls die Wahrscheinlichkeit höher als ein vorbestimmter Schwellenwert ist.

12. Roboter (100) für einen Haushalt (105), umfassend eine Steuervorrichtung (110) nach Anspruch 11.
